# FASCICULE DE BREVET EUROPEEN

(11) **EP 0 893 062 B1**
(45) Date de publication et mention de la délivrance du brevet: **08.12.2004**
(21) Numéro de dépôt: 98401831.7
(22) Date de dépôt: 20.07.1998
(51) Int. Cl.: A21D 13/08

(54) **Procédé de fabrication d'un aliment sphérique et aliment obtenu par ledit procédé**
Verfahren zur Herstellung von einem kugelförmigen Nahrungsmittel und so hergestelltes Nahrungsmittel
Method for making a spherical food product and the food product obtained thereby

(30) Priorité: 24.07.1997 FR 9709426
(43) Date de publication de la demande: 27.01.1999
(73) Titulaire: LUISSIER, 78223 Viroflay (FR)
(72) Inventeur: Grappe, Jean-Yves, 72470 Saint-Mars la Brière (FR)
(74) Mandataire: Doireau, Marc

(56) Documents cités:
- FR-A- 2 552 977
- US-A- 3 836 057
- US-A- 5 492 711
- "Good Housekeeping New Step-by-step Cook Book." 1993 , EBURY PRESS , LONDON XP002066710 * page 338, colonne 1, alinéa B - colonne 2, alinéa B *
- D. SMITH: "Delia Smith's Complete Cookery Course" 1992 , BBC BOOKS , GB XP002066711 * page 527, ligne 1 - page 531, dernière ligne * * page 531 *

## Description

La présente invention se rapporte principalement à un aliment sphérique ou sensiblement sphérique et, plus particulièrement, à un aliment comportant une croûte ou coque externe obtenue à partir d'une farine de céréale, notamment en pâte type choux et une garniture interne à base de viande, avantageusement émulsionnée ou foisonnée, notamment une mousse de canard ou une mousse de foie gras ou de produits de la mer tels que poisson ou crustacés. L'association d'une enveloppe dont au moins la partie interne est émulsionnée ou foisonnée avec une garniture de faible densité donne un aliment ayant d'excellentes qualités organoleptiques. Document US 3 836 057 décrit un appareil pour produire et déposer une garniture foisonnée. Document US 5 492 711 décrit un procédé de fabrication d'aliments. Document "Delia Smith's Complete Cookery Course, D. Smith (1992), BBC Books, GB XP002066711 décrit un procédé artisanal pour la préparation d'aliments de type choux.

Selon la présente invention, on prépare d'une part la coque et d'autre part la garniture, puis on introduit, lors d'une étape de fourrage, de préférence par injection, la garniture dans la coque.

L'invention a principalement pour objet un procédé de fabrication d'aliment, de préférence sensiblement sphérique, caractérisé en ce qu'il comporte les étapes consistant à :
a) préparer une pâte semi-liquide à partir d'eau, de sel, de farine et de préférence de beurre et d'oeuf ;
b) façonner ladite pâte pour former des pièces, de préférence sensiblement sphériques ;
c) cuire les pièces façonnées à l'étape b) jusqu'à l'obtention d'une croûte ;
d) préparer une garniture à base de viande, de poisson et/ou de fruits de mer ;
e) bourrer par injection-dosage les pièces cuites à l'étape c) avec la garniture préparée à l'étape d).

L'invention a également pour objet un procédé caractérisé en ce que, à l'étape b), on façonne des pièces sensiblement sphériques ayant un diamètre compris entre 0,8 et 5 centimètres, de préférence entre 2 et 3 centimètres, ou qui s'expanse entre 5 à 6 centimètres après cuisson.

L'invention a aussi pour objet un procédé caractérisé en ce que, à l'étape e), on bourre les pièces par injection/dosage.

L'invention a également pour objet un procédé caractérisé en ce que la garniture est foisonnée et/ou une mousse.

L'invention a aussi pour objet un procédé caractérisé en ce que, postérieurement à l'étape e), il comporte une étape d'enrobage du point d'introduction de la garniture sur la surface de la croûte de la pièce façonnée.

L'invention a également pour objet un procédé caractérisé en ce qu'il comporte en outre, entre les étapes c) et e), une étape g) de séchage des pièces cuites à l'étape c).

L'invention a aussi pour objet un procédé caractérisé en ce qu'il comporte en outre une étape h) d'emballage de l'aliment avec scellement hermétique de l'aliment, d'un corps absorbeur d'oxygène et d'un gaz neutre, notamment de l'azote.

L'invention a aussi pour objet un procédé de fabrication d'aliment sensiblement sphérique, caractérisé en ce qu'il comporte les étapes consistant à :
a) préparer une pâte semi-liquide à partir d'eau, de sel, de farine et de préférence de beurre et d'oeuf ;
b) façonner ladite pâte pour former des pièces sensiblement sphériques ;
c) cuire les pièces façonnées à l'étape b) jusqu'à l'obtention d'une croûte ;
d) préparer une garniture foisonnée et/ou sous forme de mousse à base de viande, de poisson et/ou de fruits de mer ;
e) bourrer les pièces cuites à l'étape c) avec la garniture préparée à l'étape d) à une température inférieure ou égale à 12° C.

L'invention a également pour objet un aliment de type petit choux obtenu par un procédé selon l'invention, comportant une enveloppe réalisée par cuisson d'une pâte réalisée à partir d'eau, de sel, de beurre, de farine et d'oeuf et une garniture à base de viande, de chair de poisson ou de produits de la mer.

L'invention a aussi pour objet un aliment de type petit choux caractérisé en ce que la garniture est une mousse de canard.

L'invention a également pour objet un aliment de type petit choux caractérisé en ce que la garniture est une mousse de foie gras.

Dans l'exemple préféré de réalisation, on prépare une pâte type choux semi-liquide à partir d'eau, de sel, de beurre, de farine et d'oeuf. Les choux dont le diamètre cru est par exemple compris entre 2 cm et 3 cm sont couchés sur une plaque. Le façonnage des choux est par exemple effectué par extrusion à l'aide d'une machine volumétrique à double vis, à engrenages entraînés par un moteur pas à pas avec dosage de la pâte, par exemple de 5 à 6 grammes de pâte par pièce. Toutefois, il est bien entendu que la mise en oeuvre des choux ayant une section elliptique, ovale, allongée ou analogue ne sort pas du cadre de la présente invention.

On effectue la cuisson des choux formés par exemple dans un four à chaleur tournante à air ventilé, à une température de 220°C pendant 8 à 10 minutes. Lors de la cuisson, le choux perd 40 % de sa masse par évaporation d'eau, alors que son volume augmente lors de l'expansion microfoisonnée. En fin de cuisson, le choux a un diamètre sensiblement égal à 5 cm. Lors de la cuisson, les protéines de l'oeuf de la pâte à choux sont coagulées. Le choux formé est refroidi, sur une grille, par circulation d'air propre pendant 20 mn, ce qui évite son affaissement.

Dans l'exemple préféré de réalisation, chaque choux comprend une croûte externe avec un intérieur micro-foisonné présentant une faible résistance mécanique. Toutefois, il est bien entendu que la mise en oeuvre de choux comportant uniquement la croûte, l'intérieur étant vide, avant l'introduction de la garniture, ne sort pas du cadre de la présente invention.

D'autre part, on prépare la garniture, par exemple une mousse de canard pasteurisée en effectuant les mélanges d'ingrédients suivant un procédé usuel aux productions de mousses de foie.

Les choux, avantageusement refroidis, sont bourrés avantageusement par injection/dosage de la garniture. Le dosage s'effectue avantageusement à une température inférieure ou égale à 12°C, dans une salle propre, en veillant particulièrement à éviter toute contamination autour des machines de dosage. On injecte par exemple 5 à 6 grammes de mousse de canard dans chaque choux. Lors de l'injection/dosage, l'intérieur du choux micro-foisonné offre une faible résistance à la garniture qui plaque les cloisons micro-foisonnées internes sur la face interne de la croûte.

Les fonds de choux farcis peuvent être enrobés par des substances filmogènes ou des garnitures, assurant la protection et/ou la décoration du choux du côté par lequel il a été rempli. L'enrobage peut nécessiter un séchage.

Avantageusement, les choux selon la présente invention sont conditionnés en sacs hermétiques avec balayage azote ou un autre gaz neutre et un absorbeur d'oxygène. L'élimination de l'oxygène permet de prolonger la conservation des choux selon la présente invention. La présence d'azote limite la dépression régnant dans l'emballage étanche après l'absorption d'oxygène, de manière à éviter la déformation des choux par constriction du sac d'emballage soumis, sur sa face externe, à la pression atmosphérique.

La présente invention s'applique principalement à l'industrie alimentaire.

## Revendications

1. Procédé de fabrication d'aliments, de préférence sensiblement sphériques, **caractérisé en ce qu'**il comporte les étapes consistant à :
a) préparer une pâte semi-liquide à partir d'eau, de sel, de farine et de préférence de beurre et d'oeufs ;
b) façonner ladite pâte pour former des pièces, de préférence sensiblement sphériques ;
c) cuire les pièces façonnées à l'étape b) jusqu'à l'obtention d'une croûte ;
d) préparer une garniture à base de viande, de poisson et/ou de fruits de mer;
e) bourrer par injection-dosage les pièces cuites à l'étape c) avec la garniture préparée à l'étape d).

2. Procédé selon la revendication 1, **caractérisé en ce que** à l'étape b), on façonne des pièces sensiblement sphériques ayant un diamètre compris entre 0,8 et 5 centimètres, de préférence entre 2 et 3 centimètres, ou qui s'expanse entre 5 à 6 centimètres après cuisson.

3. Procédé selon la revendication 1 ou 2, **caractérisé en ce que** à l'étape e), on bourre les pièces par injection/dosage de telle sorte que l'introduction de la garniture plaque sur la face interne de la croûte les cloisons micro-foisonnées présentes à l'intérieur de la pièce.

4. Procédé selon l'une quelconque des revendications précédentes, **caractérisé en ce que** la garniture est foisonnée et/ou est une mousse.

5. Procédé selon l'une quelconques des revendications précédentes, **caractérisé en ce que**, postérieurement à l'étape e), il comporte une étape d'enrobage du point d'introduction de la garniture sur la surface de la croûte de la pièce façonnée.

6. Procédé selon l'une quelconque des revendications précédentes, **caractérisé en ce qu'**il comporte en outre entre les étapes c) et e) une étape g) de séchage des pièces cuites à l'étape c).

7. Procédé selon l'une quelconque des revendications précédentes, **caractérisé en ce qu'**il comporte en outre une étape h) d'emballage de l'aliment avec scellement hermétique de l'aliment, d'un corps absorbeur d'oxygène et d'un gaz neutre, notamment de l'azote.

8. Procédé selon l'une quelconque des revendications précédentes, **caractérisé en ce que** l'étape e) de bourrage est effectuée à une température inférieure ou égale à 12° C.

9. Aliment de type petit choux obtenu par un procédé selon l'une quelconque des revendications précédentes, comportant une enveloppe réalisée par cuisson d'une pâte réalisée à partir d'eau, de sel, de beurre, de farine et d'oeufs et une garniture à base de viande, de chair de poisson ou de produits de la mer.

10. Aliment de type petit choux selon la revendication 9, **caractérisé en ce que** la garniture est une mousse de canard.

11. Aliment de type petit choux selon la revendication 10, **caractérisé en ce que** la garniture est une mousse de foie gras.

## Patentansprüche

1. Verfahren zur Herstellung von Nahrungsmitteln, die vorzugsweise annähernd kugelförmig sind, **dadurch gekennzeichnet, dass** es die Stufen umfasst, die bestehen aus:
a) Herstellen eines halbflüssigen Teigs, ausgehend von Wasser, Salz, Mehl und vorzugsweise Butter und Eiern;
b) Bearbeiten des Teigs, um Stücke zu bilden, die vorzugsweise annähernd kugelförmig sind;
c) Backen der in Stufe b) bearbeiteten Stücke bis zum Erhalt einer Kruste;
d) Herstellen einer Füllung auf der Grundlage von Fleisch, Fisch und/oder Meeresfrüchten;
e) Stopfen der in Stufe c) gebackenen Stücke durch Injektionsdosierung mit der in Stufe d) hergestellten Füllung.

2. Verfahren nach Anspruch 1, **dadurch gekennzeichnet, dass** man in Stufe b) Stücke bearbeitet, die annähernd kugelförmig sind, einen Durchmesser zwischen 0,8 und 5 cm, vorzugsweise zwischen 2 und 3 cm haben, und die sich nach dem Backen zwischen 5 und 6 cm ausgedehnen.

3. Verfahren nach Anspruch 1 oder 2, **dadurch gekennzeichnet, dass** man in Stufe e) die Stücke durch Injektionsdosierung derart stopft, dass die Einführung der Füllung die micro-gequollenen Trennwände, die im Inneren des Stücks vorhanden sind, gegen die Innenseite der Kruste drückt.

4. Verfahren nach einem der vorangehenden Ansprüche, **dadurch gekennzeichnet, dass** die Füllung aufgegangen ist bzw. aufgequollen ist und/oder eine Mousse ist.

5. Verfahren nach einem der vorangehenden Ansprüche, **dadurch gekennzeichnet , dass** es nach der Stufe e) eine Stufe des Überziehens des Einführungspunktes der Füllung auf der Oberfläche der Kruste des bearbeiteten Stücks umfasst.

6. Verfahren nach einem der vorangehenden Ansprüche, **dadurch gekennzeichnet, dass** es außerdem zwischen den Stufen c) und e) eine Stufe g) der Trocknung der in Stufe c) gebackenen Stücke umfasst.

7. Verfahren nach einem der vorangehenden Ansprüche, **dadurch gekennzeichnet , dass** es außerdem eine Stufe h) der Verpackung des Nahrungsmittels mit hermetischer Versiegelung des Nahrungsmittels zusammen mit einem Absorptionskörper für Sauerstoff und Inertgas, insbesondere Stickstoff, umfasst.

8. Verfahren nach einem der vorangehenden Ansprüche, **dadurch gekennzeichnet dass** die Stufe e) der Füllung bei einer Temperatur von 12°C oder darunter durchgeführt wird.

9. Nahrungsmittel des Typs "petit choux", das durch das Verfahren nach einem der vorangehenden Ansprüche hergestellt wird, das eine Hülle, die durch Backen eines Teigs, der ausgehend von Wasser, Salz, Butter, Mehl und Eiern hergestellt wird, und eine Füllung auf der Grundlage von Fleisch, Fischfleisch oder Meeresprodukten umfasst.

10. Nahrungsmittel des Typs "petit choux" nach Anspruch 9 **dadurch gekennzeichnet dass** die Füllung Entenmousse ist.

11. Nahrungsmittel des Typs "petit choux" nach Anspruch 10, **dadurch gekennzeichnet, dass** die Füllung eine Stopfleber-Mousse ist.

## Claims

1. Method for manufacturing foodstuffs, which are preferably substantially spherical, **characterised in that** it is composed of the stages comprising:
a) preparation of a semi-liquid pastry from water, salt, flour and, preferably, butter and eggs;
b) fashioning of the pastry to form articles which are preferably substantially spherical;
c) cooking of the articles which are fashioned in stage b) until a crust is obtained;
d) preparation of a filling, based on meat, fish and/or seafood;
e) the articles cooked in stage c) are stuffed with the filling prepared in stage d) by injection/metering.

2. Method according to claim 1, **characterised in that**, in stage b), substantially spherical articles are fashioned and have a diameter which lies between 0.8 and 5 centimetres, preferably between 2 and 3 centimetres, or which is expanded to between 5 and 6 centimetres after cooking.

3. Method according to claim 1 or 2, **characterised in that**, in stage e), the articles are stuffed by infection/metering in such a manner that the introduction of the filling presses the micro-expanded partitions which are present inside the article against the internal face of the crust.

4. Method according to any one of the preceding claims, **characterised in that** the filling is expanded and/or is a mousse.

5. Method according to any one of the preceding, claims, **characterised in that**, after stage e), it comprises a stage for coating the point of introduction of the filling on the surface of the crust of the fashioned article.

6. Method according to any one of the preceding claims, **characterised in that** it further comprises, between stages c) and e), a stage g) for drying the articles cooked in stage c).

7. Method according to any one of the preceding claims, **characterised in that** it further comprises a stage h) for packing the foodstuff with hermetic sealing of the foodstuff, of an oxygen-absorbent body and of a neutral gas, in particular nitrogen.

8. Method according to any one of the preceding claims, **characterised in that** the stuffing step e) is carried out at a temperature which is less than or equal to 12°C.

9. foodstuff of a small choux-pastry type obtained by a method according to any one of the preceding claims, comprising an envelope produced by cooking a pastry which is produced from water, salt, butter, flour and eggs and a filling based on meat, fish or seafood products.

10. Foodstuff of a small choux-pastry type according to claim 9, **characterised in that** the filling is a duck mousse.

11. Foodstuff of a small choux-pastry type according to claim 10, **characterised in that** the filling is a foie gras mousse.
